(19) Europäisches Patentamt
European Patent Office
Office européen des brevets

(11) Publication number : **0 469 842 A2**

(12) # EUROPEAN PATENT APPLICATION

(21) Application number : **91306952.2**

(22) Date of filing : **29.07.91**

(51) Int. Cl.$^{5}$ : **H04N 5/782,** H04N 5/92

(30) Priority : **30.07.90 JP 202122/90**

(43) Date of publication of application : **05.02.92 Bulletin 92/06**

(84) Designated Contracting States : **DE ES FR GB IT NL**

(71) Applicant : **MATSUSHITA ELECTRIC INDUSTRIAL CO., LTD.**
**1006, Oaza Kadoma**
**Kadoma-shi, Osaka-fu, 571 (JP)**

(72) Inventor : **Bannai, Tatsushi**
**389-12, Kitanoda, Sakai-shi**
**Osaka-fu 588 (JP)**
Inventor : **Shibata, Hideaki**
**1-11-6, Chuou, Jotou-ku**
**Osaka-shi, Osaka-fu 536 (JP)**
Inventor : **Ohtsu, Masamitsu**
**2-258-1205, Yakumohigashimachi**
**Moriguchi-shi, Osaka-fu 570 (JP)**
Inventor : **Okamoto, Hiroshi**
**3-1825-58, Shouyoudai**
**Nara-shi, Nara-ken 631 (JP)**

(74) Representative : **Crawford, Andrew Birkby et al**
**A.A. THORNTON & CO. Northumberland House 303-306 High Holborn**
**London WC1V 7LE (GB)**

(54) **Video signal digital recording/reproducing apparatus.**

(57) In a video signal recording/reproducing apparatus, a video signal is subjected to bit rate reduction including a variable length processing to obtain a coded data. The coded data is separated into a basic data which shows a basic construction of video image and is given by a fixed data length and an additional data which shows detailed information of the video image and is given by a variable data length. In recording the coded data containing these basic data and additional data on a recording medium, only the basic data are gathered and recorded in a continued region on the recording medium and only the additional data are gathered and recorded continuously in a region other than the basic data recording region, by which both data are recorded in separated regions on the recording medium.

EP 0 469 842 A2

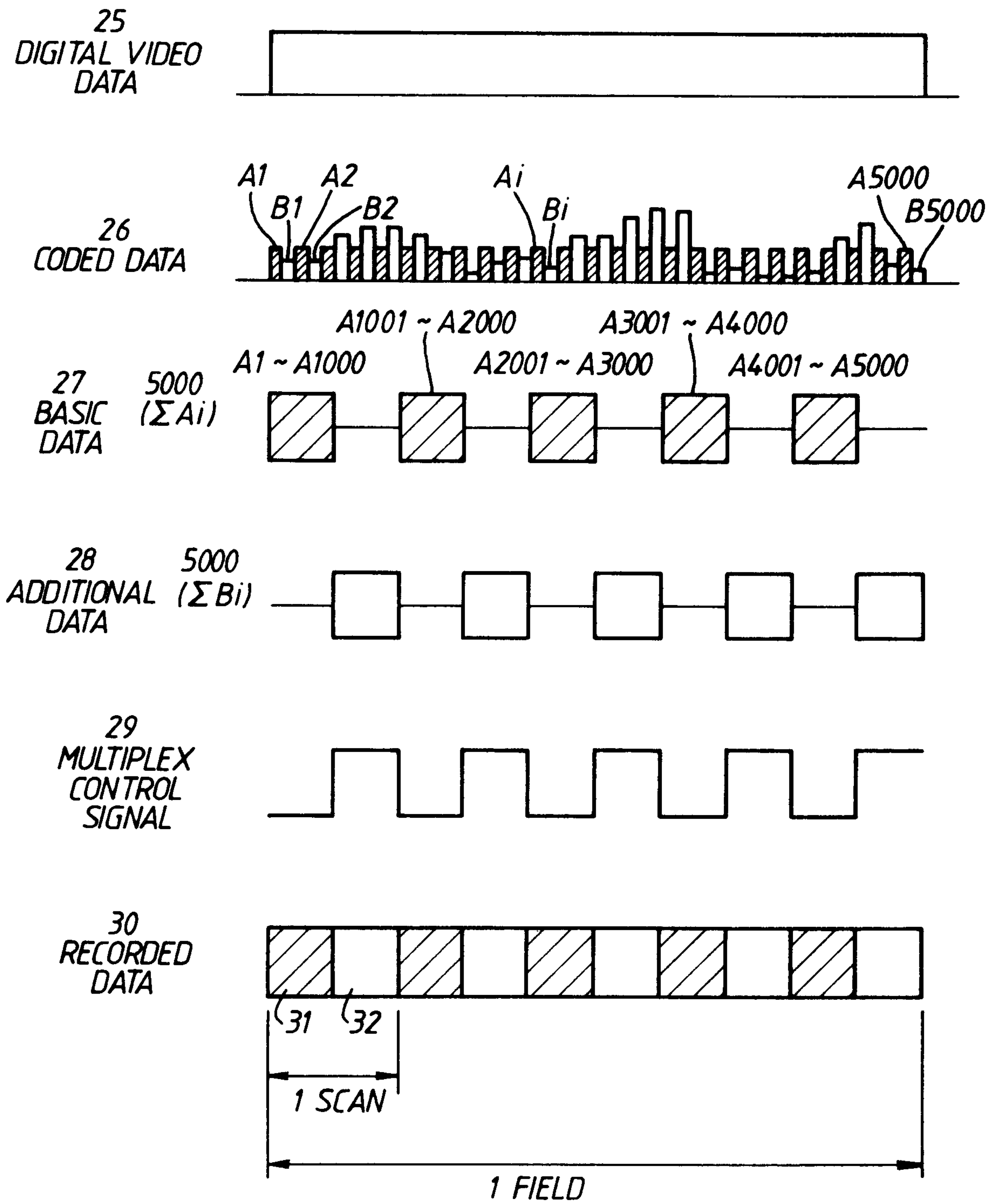
25
DIGITAL VIDEO
DATA
A1
B1
A2
B2
Ai
Bi
A5000
B5000
26
CODED DATA
A1001 ~ A2000
A3001 ~ A4000
A1 ~ A1000
A2001 ~ A3000
A4001 ~ A5000
27
BASIC
DATA
5000
(ΣAi)
28
ADDITIONAL
DATA
5000
(ΣBi)
29
MULTIPLEX
CONTROL
SIGNAL
30
RECORDED
DATA
31
32
1 SCAN
1 FIELD

Fig.3.

## BACKGROUND OF THE INVENTION

### 1. Field of The Invention

The present invention relates to a video signal recording/reproducing apparatus for recording video signal by bit rate reduction to give stabilized reproduction video images.

### 2. Description Of The Prior Art:

In tune with the trend to adopt digital system in various audio and video apparatuses and transmission channels, vigorous studies have been in practice on bit rate reduction systems for efficiently reducing data, and in the video tape recorders (hereinafter to be simply described as VTR) study is being made to increase the utilization efficiency of the tape by reducing the amount of the data to be recorded, utilizing this technique. In general, bit rate reduction is to reduce the data amount by deleting the two-dimension spatial superfluity and inter-frame superfluity by utilizing the correlations of video images. It is to extract the characteristic of the video image and provide coding to its characteristic. Further, as the video image has individual characteristic in the part of the pixel, respectively, and the data amounts representing the respective characteristic are respectively different, variable length coding which gives the coding amount in the amount different respectively according to the characteristic of the video image in a narrow range can give the higher compression rate without deteriorating the encoded image quality than the fixed length coding for coding in a certain data amount in a certain narrow range of image.

As reviewed above, the bit rate reduction allows curtailment of the data amount in the information source in good efficiency, but generates various problems in recording and reproducing the data of bit rate reduction on VTR. For example, in VTR, the signal to noise ratio (hereinafter to be simply SNR) in reproducing is inferior to that in transmission and additionally dropout occurs. Therefore, even in carrying out recording and reproducing by adding error correcting code, there may be cases for the data after the error correction to generate bit errors. If the data includes errors, erroneous video signal is to be decoded, in which case, in comparison with the case of recording straightly the video signal without compressing, when recording and reproducing are performed by bit rate reduction, the image quality is deteriorated over the wide range on the decoded pixel by one bit error. Further, when there are errors in the data to show the basic construction of the pixel out of the bit rate reduced data, the effect to deterioration of the image quality of the decoded image becomes large in comparison with the case where errors are involved in the data of the detailed part. Moreover, when a variable length bit rate reduction is performed, errors are propagated- to other data, providing a problem to cause deterioration of image quality over a wider range on the decoded pixel.

In VTR, search is essential, and the reproducing head crosses the video track. It is difficult to decode the search image from the variable length data reproduced under the minced state. Further, as the correction capacity in searching generally decreases drastically in comparison with the case of normal reproducing, bit errors are increased.

As a disclosure to convert the video signal into a variable length bit rate reduction, record on VTR and decode the discriminating search image, there is Japanese Patent Publication (Unexamined) No.63-95791/1988. Japanese Patent publication (Unexamined) No.63-95791/1988 relates to a coding apparatus in which two dimension region formed by a video signal is divided into plural blocks, each of which is subjected to variable length coding to obtain the coding data of fixed length data and variable length data, the variable length data are distributed so as to make the length of the variable length data equal by the abovementioned block, and the error correction code is added by a block in which the data length has become equal, so as to carry out recording.

However, in VTR, it is an effective means to make the tape winding angle small in searching so as to alleviate the burden of mechanical system in high speed searching, and the construction of the foregoing reference involves a problem that, as the data of the fixed length are recorded at an equal interval on the recording track on the recording medium, when the tape winding angle is reduced, there occurs recorded portion of the fixed length data not coming into contact with the reproducing head to cause extreme deterioration of the search image quality. Further, in case of reproducing the signal by using plural heads and improving the data amount to be reproduced per specified time in high speed searching (hereinafter to be simply data acquisition rate), there is required a new reproducing circuit for processing in parallel with the reproducing circuit to be used for normal reproduction.

## SUMMARY OF THE INVENTION

In view of the points as mentioned above, an object of the present invention is to provide a recording and reproducing apparatus in which stabilized reproduced video images are obtainable in recording and reproducing the data of the video signal which has been subjected to bit rate reduction.

According to the present invention, there is provided a video signal recording/reproducing apparatus comprising means for obtaining coded data by subjecting a video signal to bit rate reduction including variable length processing, means for separating said coded data into a basic data which shows a basic construction of the video signal and is given by a fixed data length and an additional data which shows detailed information of the video signal and is given by a variable data length, and means for recording said basic data collectively and continuously in a partial region on a recording medium and said additional data collectively and continuously in a region other than the basic data recording region.

In the present invention, by the abovementioned construction, of the coded data which have been subjected to bit rate reduction, the basic data showing the basic construction of the video signal and the additional data showing the detailed information are recorded together in the separated regions on a recording medium. Accordingly, there is no propagation of the error of the basic data part given by a fixed data length to other block, so that the error propagation characteristic to the basic data can be improved. Further, if a -search image is obtained by decoding the basic data in searching, notwithstanding the system being a variable length processing as a bit rate reduction system, a search image can be obtained only by the processing of the basic data at which the data length is fixed in searching, thus simplifying the signal processing. Further, by recording the basic data in a region within the specified angle of the rotary angle of the rotary cylinder and subjecting the plural reproducing heads to reproduction by switching at each specified angle in searching, data acquisition rate in searching can be improved without increasing the number of the channels for reproduction processing, so that it becomes easy to recognize the search image even in case of quick image movement or scene change.

## BRIEF DESCRIPTION OF THE DRAWINGS

Fig. 1 is a signal processing block diagram of a recording/reproducing apparatus in an embodiment of the present invention;

Fig. 2 is a recording track pattern diagram in said embodiment;

Fig. 3 is a timing chart showing the timing of the signal processing;

Fig. 4 is a head locus pattern diagram in which the reproducing head traces on the recording medium in searching;

Fig. 5 is a wave form diagram showing the envelope of the reproduced signal in searching;

Fig. 6 is a conceptual view showing block formation of the coding block; and

Fig. 7 is a head layout sketch showing the construction of the rotary cylinder.

## DESCRIPTION OF THE PREFERRED EMBODIMENTS:

Fig. 1 is a signal processing block diagram of a recording/reproducing apparatus in an embodiment of the present invention, and Fig. 2 is a recording track pattern diagram in this embodiment. In this embodiment, as shown in Fig. 7, the recording heads (REC-A, REC-B) are mounted at 180° opposite to each other on a rotary cylinder, and the reproducing heads are mounted in two channels at the angles of +45° (PB1-A, PB1-B) and -45° (PB2-A, PB2-B) to the recording heads. Explanation is given on a case of for example rotating the rotary cylinder at a rotation speed of 5 times that of the frame frequency (i.e. one-field image is recorded on five tracks) to carry out recording. Also, for simplification of explanation, explanation is given on the case that the video signal to be recorded is the luminance signal.

In Fig. 1, the reference numeral 1 shows an input terminal for inputting video signals, 2 an A/D converter for converting the video signal into video image data of digital signals of 8 bits, 3 a block forming circuit for splitting the video image data into coding blocks, 4 a variable length coding circuit for subjecting the video image data to bit rate reduction including variable length processing (hereinafter to be simply referred to as variable length coding), 5 a first data separation circuit for extracting and dividing a basic data which shows a basic characteristic of the video image and has a fixed data length and an additional data which shows detailed information and has a variable data length from the variable length coded data, 6 a multiplex circuit for time-domain multiplexing the basic data and additional data, 7 a digital recording processing circuit for carrying out error correction coding, additions of synchronous signal and ID (identification signal) and modulation which are performed in digital recording, 8 a recording head, 9 a first reproducing head, 10 a second reproducing head, 11 a recording medium, 12 a first switch for selecting the reproduction signal between the first and second reproducing heads, 13 a digital reproducing circuit for carrying out reproduction and demodultion of the reproduced signal, detection of the synchronous signal and ID, and error correction, 14 a second data separation circuit for separating the basic data and the additional data which are time-domain multiplexed on the reproduced data and outputting, 15 a decoding circuit for decoding the decoding data from the basic data and the additional data, 16 a basic data extracting circuit for extracting the basic data from the reproduced data, 17 a basic data decoding circuit for decoding the decoding data only with the basic data, 18 a second switch for selecting between the output from the decoding circuit 15 and the output from the basic data decoding circuit 17, 19 a block unifying circuit for unifying the decoded data decoded on a block by block basis, rearranging into the data row of video signals to obtain reproduced data, 20 a D/A converter for converting the reproduced data into analog video signals, and 21 an output terminal. The second switch 18 is controlled by a reproduction mode signal obtainable from a reproduction mode selection switch of VTR (not illustrated), so as to output by selection the output of the decoding circuit 15 in normal reproducing mode, and the output of the basic data decoding circuit 17 in searching mode. The selection signal generating circuit 101 generates a selection signal which reverses at every 90° rotation of the cylinder from the well known cylinder rotation phase detection signal. The gate 102, being controlled by the reproducing mode signal, allows to pass the selection signal from the selection signal generating circuit 101 only during searching, so as to output the output signal of the first reproducing head 9 by selection during the normal reproduction of the first switch 12, and output the output signals of the first and the second reproducing heads 9 and 10 alternately in response to the selection signal during searching. In Fig. 2, the part 22 denotes a recording track for recording the additional data, 23 a recording track for recording the basic data, and 24 a recording medium.

With respect to the recording/reproducing apparatus of this embodiment constituted as above, the operation thereof is explained. The video signal inputted from the input terminal 1 is converted to a digital video signal and inputted to the block forming circuit 3. In the block forming circuit 3, the said video data is temporarily stored in a memory, a screen of 1 field is split into N and read out from the memory, and the video data split into the coding blocks are outputted. Fig. 6 is a conceptual view showing this block formation. The screen of 1 field comprises I line * J picture elements, which are split into small coded blocks by i line * j picture elements. The number of the coding blocks of the video data of 1 field, N, is given as N = (I/i) * (J/j). In this embodiment, with the data taken for example as 1 = 800, J = 400, i = j = 8, and N = 5000, explanation will be given hereafter.

The block-formed video data as above are inputted to the variable length coding circuit 4 and subjected to variable length coding. The variable length coding is obtained by giving the number of bits having the different coding lengths according to the information amount held by the video data in each coding block. The variable length coded data generally include the basic data An which shows the basic characteristics of the video image of the n-th coded block (n is an integer of $1 \leqq n \leqq N$) and the additional data Bn which shows the detailed information of the video image. Here, as an example of the variable length coding, explanation is given simply on DCT (Discrete Cosine Transform) and dynamic range coding. DCT is, for example, to carry out frequency conversion by the operation of the 8 * 8 data matrix obtained by dividing by each 8 line * 8 picture elements and the 8 * 8 transform matrix, and code the sequency which is the result of this operation by a variable length code such as for example a Huffman code. In this case, the basic data An to the nth coding block is the data in which the sequency which shows the DC component is coded by the fixed data length, and the additional data Bn is one in which the sequency else than that is coded by Huffman coding. On the other hand, the dynamic range coding is such as to obtain a dynamic range of the video image data contained in the coding block divided for example by 8 lines * 8 picture elements on a screen, and to quantize each picture element within the dynamic range with the number of bits less than 8 bits. Accordingly, the basic data An to the coding block n is a data which is the dynamic range and the minimum value given by the fixed length data, and the additional data Bn is a data which has been coded by a specified coding length according to the dynamic range on a picture element by picture element basis.

The part 26 in Fig. 4 shows the data which has been subjected to variable length coding in this method. The basic data of each coding block is given by the fixed length data, and the additional data Bn is given by the variable length data. In coding, processing is given so that the coded data amount by the coding block may vary according to the characteristic held by the video data but the total as 1 field becomes a certain amount or therebelow. This variable length data 26 is inputted to the first data separation circuit 5, separated into the basic data An and the additional data Bn, and stored in the buffer memory by 1 field, respectively. From the data separation circuit 5, the basic data and the additional data, collected respectively, are outputted as shown in 27 and 28 in Fig. 4. As the recording tracks of 1 field are 5 tracks, and the coding blocks N contained in 1 field are 5000, 1000 basic data An are collected in an area 31 shown by the oblique lines and outputted. Also, to an area shown by 32, the additional data Bn are collected and outputted, but as the data amount by the coding block varies according to the information amount held by the video data by each coding block, the timing of output varies.

These basic data and additional data are controlled by a multiplexing control signal 29 in the multiplexing circuit 6 and multiplexed to the 1 channel recording data 30. The recording data 30 is subjected to error correction coding, addition of synchronous signal and ID and modulation processings which are carried out in inputting to the digital recording processing circuit 7 and digitally recording, and recorded on the recording medium 11 through the recording head 8. The basic data 31 of the recording data 30 and additional data 32 in Fig. 3 are respectively recorded on the basic data recording track 23 on the recording medium and additional data recording track 22 in Fig.

2, respectively. The recording head 8 corresponds to the -recording heads of REC-A and REC-B on the rotary cylinder as shown in Fig. 7. In this embodiment, the ratio of the basic data to the additional data is set at 1 : 1.

Next, explanation is given on the reproducing processing. During the normal reproduction, the signal is reproduced from the first reproducing head 9 and inputted to the digital reproducing processing circuit 13 through the first switch circuit 12. During the normal reproduction, the abovementioned first switch circuit 12, being controlled by the output signal of the gate 102, always selects the first reproducing head 9 and outputs. The reproduced signal is subjected to demodulation, detections of synchronous signal and ID, and error correction in the digital reproducing processing circuit 13 as mentioned above, and inputted to the second data separation circuit 14. In the second data separation circuit 14, the reproduced data is stored in a temporary memory, and the basic data and the additional data are outputted under separation. In the decoding circuit 15, the decoding data are decoded in sequence by the coding block from the basic data and additional data, and the decoded data are outputted to the unified circuit 19 through the second switch circuit 18. The second switch circuit, being controlled by the reproducing mode signal, always selects the output signal of the decoding circuit 15 during normal reproduction. The decoded data decoded by each coding block as above is re-lined to the data line of the video signal by the block unification circuit 19, after which it is converted into an analog signal with the D/A converter 16 and outputted as a reproduced signal.

Next, explanation is given on the reproducing processing in searching. In searching, the reproducing signals outputted from the first reproducing head 9 and the second reproducing head 10 are alternately selected with the first switch 12 to carry out reproducing processing. Fig. 4 shows the head loci in which the first and the second reproducing heads 9 and 10 trace on the recording medium in searching, wherein 33 denotes the head locus of the first reproducing head 9 and 34 the head locus of the second reproducing head 10. Fig. 5 shows envelope waveforms from the head of the respective reproduced signals as aforementioned and the signal waveforms after switching. In Fig. 5 the shaded areas show the reproduced signals from the basic data recording track, which are reproduced by concentration within 90 degrees (i.e. within 1/2 scan) of the rotation angle of the rotary cylinder by each head. As the first reproducing head 9 and the second reproducing head 10 are disposed on the rotary cylinder at an angle of 90 degrees, the reproduced signals from the two heads may be selected at each 90 degrees of the rotation angle of the cylinder to give the reproduced signal of 1 channel composed approximately solely of the basic data. Selection at each 90 degrees of the rotation angle of the cylinder is carried out in the first switch circuit 12. The control signal of the first switch circuit 12 is a selection signal produced by the selection signal generating circuit 101 from the rotation phase detecting signal of the rotary cylinder, being a selection signal outputted through the gate 102 which, being controlled by the reproducing mode signal, is opened only during searching.

The reproduced signal formed only of the above switched basic data is shown in the switch output signal 38 in Fig. 5. In the basic data extracting circuit 16, the additional data which has been mixed in the switch output signal 37 caused by disagreement of the selection timing of the first switch circuit 12 or the like is removed, and the basic data only is outputted to the basic data decoding circuit 17. In the basic data decoding circuit 17, if the bit rate reduction is a dynamic range coding, an average level is calculated by block from the minimum value and the dynamic range and the mosaic form decoding data is decoded by each coding block. If it is a conversion coding such as DCT, a mosaic form decoding data is decoded from the DC component of the sequency. The decoded data is inputted to the block unification circuit 19 through the second switch circuit 18, and after rearrangement into the data of the video signal, it is converted into the analog signal by the D/A converter 20 and outputted to the output terminal 17. The second switch circuit 18 is controlled by the reproducing mode signal, and during searching it always selects the output signal of the basic data decoding circuit 17.

As described above, according to this embodiment, the video signal is subjected to variable length coding, and the basic data which shows the basic construction of the video image and the additional data which shows the detailed information of the same are recorded in the regions separated by the rotation angle (90 degrees) of the rotary cylinder. Accordingly, it is possible to obtain reproduced signal composed only of the basic data by selecting the two-channel reproducing heads mounted at 90 degree angle difference in searching. Therefore, with the signal processing line unchanged, the data acquisition rate of the basic data is doubly increased. However, if it is desired to obtain the similar effect in recording in the mixed presence of the basic data and the additional data on a recoding medium, a new reproducing processing circuit is required. Further, with respect to the basic data acquisition rate per scan, due to the recording of the basic data in the region within 90 degrees of the rotation angle of the rotary cylinder (i.e. within 1/2 of one track), the frequency for the reproducing head to cross the track in searching equivalently becomes 1/2, so that the rate of acquisition of the basic data per scan of the reproducing head is improved in comparison with the case of recording the basic data in dispersion over the full length of the recording track. As the data renewal rate in searching is accelerated by the improvement of these data acquisition rates, the video images under search follows the changes in at high speed even in case of-quick movement or change in scene, thereby giving the search images which can be easily recognized.

This improvement of data acquisition rate can be attained even in case of the bit rate reduction using a fixed length coding (with respect to the circuit constitution in this case, the variable length coding circuit 4 of Fig. 1 becomes a fixed length coding circuit to carry out coding in fixed length), which is particularly effective when a variable length coding which shows good coding efficiency is employed. In other words, notwithstanding the variable length processing, the basic data having the fixed data length are recorded by collection, so that the error propagation characteristic to the basic data, important in decoding, can be improved, and stabilized reproduced images can be obtained. Further, even in the data which has been subjected to variable length coding, the search images can be decoded only by the fixed length reproduced basic data in searching, so that the signal processing is much simplified, and more stabilized search images can be obtained.

Although the images in searching become a mosaic screen, such an image style does not provide a large problem because the search images which can be sufficiently identified are obtainable because of the small coding blocks. Further, since the VTR for professional use is furnished with a preceding reproducing head and a simultaneous reproducing head, when the basic data in searching is reproduced by selecting them, the data acquisition rate in searching can be improved without any special head.

In this embodiment, there have been provided for explanation a basic data extracting circuit 16 which is operated only in searching and a basic data decoding circuit 17. However, the same functions as them can be included in the second data separation circuit 14 and the decoding circuit 15, respectively.

Further, although explanation has been given on the premise that the recording channel is 1 channel, it may be a multi-channel recording to give the same effect unchanged. In other words, generally in recording and reproducing video signals of P channels (P = 1, 2, 3, ...), there are provided P recording heads on the rotary cylinder to record the coded data. Also, the rotary cylinder is provided with P first reproducing heads and Q (Q = 1, 2, 3, ...) second reproducing heads mounted at a specified angle to the first reproducing head. In searching, the first reproducing heads and the second reproducing heads may be selected at a specified timing with a switch 12 to obtain the reproduced signals of P channels.

Whereas the ratio of the basic data to the additional data has been set to be 1 : 1, any other ratio may be adopted to give the similar effects. Further, in this embodiment, the data acquisition rate is doubly increased by processing by selecting two heads. However, it is possible to adopt such construction as to make the tape winding angle in searching 90 degrees to lessen the burden of mechanical system in searching. Needless to say, the present invention can be utilized not only for VTR but also for other recording/reproducing apparatuses such as video disk player.

## Claims

1. A video signal digital recording/reproducing apparatus comprising:

    means for obtaining coded data by subjecting a video signal to bit rate reduction including variable length processing,

    means for extracting and separating a basic data which shows a basic construction of the video signal and is given by a fixed data length and an additional data which shows detailed information of the video signal and is given by a variable data length out of said coded data, and

    means of recording only said separated basic data collectively in a continuous region on a recording medium and only the additional data collectively continuously in a region other than said basic data recording region.

2. An apparatus as claimed in Claim 1, further comprising means for decoding a search image from the reproduced basic data in a searching mode.

3. An apparatus as claimed in Claim 2, wherein said recording means comprises means for recording the basic data and the additional data on the recording medium using a rotary cylinder, and wherein the respective recording regions of the basic data and the additional data on said recording medium are separated regions defined by a rotation angle of the rotary cylinder.

4. An apparatus as claimed in Claim 3, further comprising:

    means for recording a coded data by providing recording heads corresponding to P (P = 1 , 2, 3, ... ) channels on a rotary cylinder;

    means for reproducing in the searching mode by providing first reproducing heads of P (P = 1, 2, 3, ...) channels on said rotary cylinder and second reproducing heads of Q (Q = 1, 2, 3, ...) channels mounted at a specified angle to said first reproducing heads; and

    means for obtaining reproduced signals of P channels by selecting said first reproducing heads and second reproducing heads at a specified timing in the searching mode.

**5.** A video signal recording/reproducing apparatus comprising:

means for obtaining a coded data by subjecting a video signal to bit rate reduction to code with fixed length coding;

means for extracting and separating a basic data which shows a basic construction of the video signal and an additional data which shows detailed information of the video signal from said coded data;

means for recording said coded data on a recording medium by using recording heads of P channels (P = 1, 2, 3, ...) mounted on a rotary cylinder;

means for collecting said separated basic data and additional data respectively in separated regions on a recording medium defined by a rotary angle of said rotary cylinder;

means for reproducing in a searching mode by providing first reproducing heads of P (P = 1, 2, 3, ...) channels on said rotary cylinder and second reproducing heads of Q (Q = 1, 2, 3, ... ) channels mounted at a specified angle to said first reproducing heads;

means for obtaining reproduced signals of P channels by selecting said first reproducing heads and second reproducing heads at a specified timing in the searching mode; and

means for decoding a search image from the reproduced basic data in the reproduced signal in the searching mode.

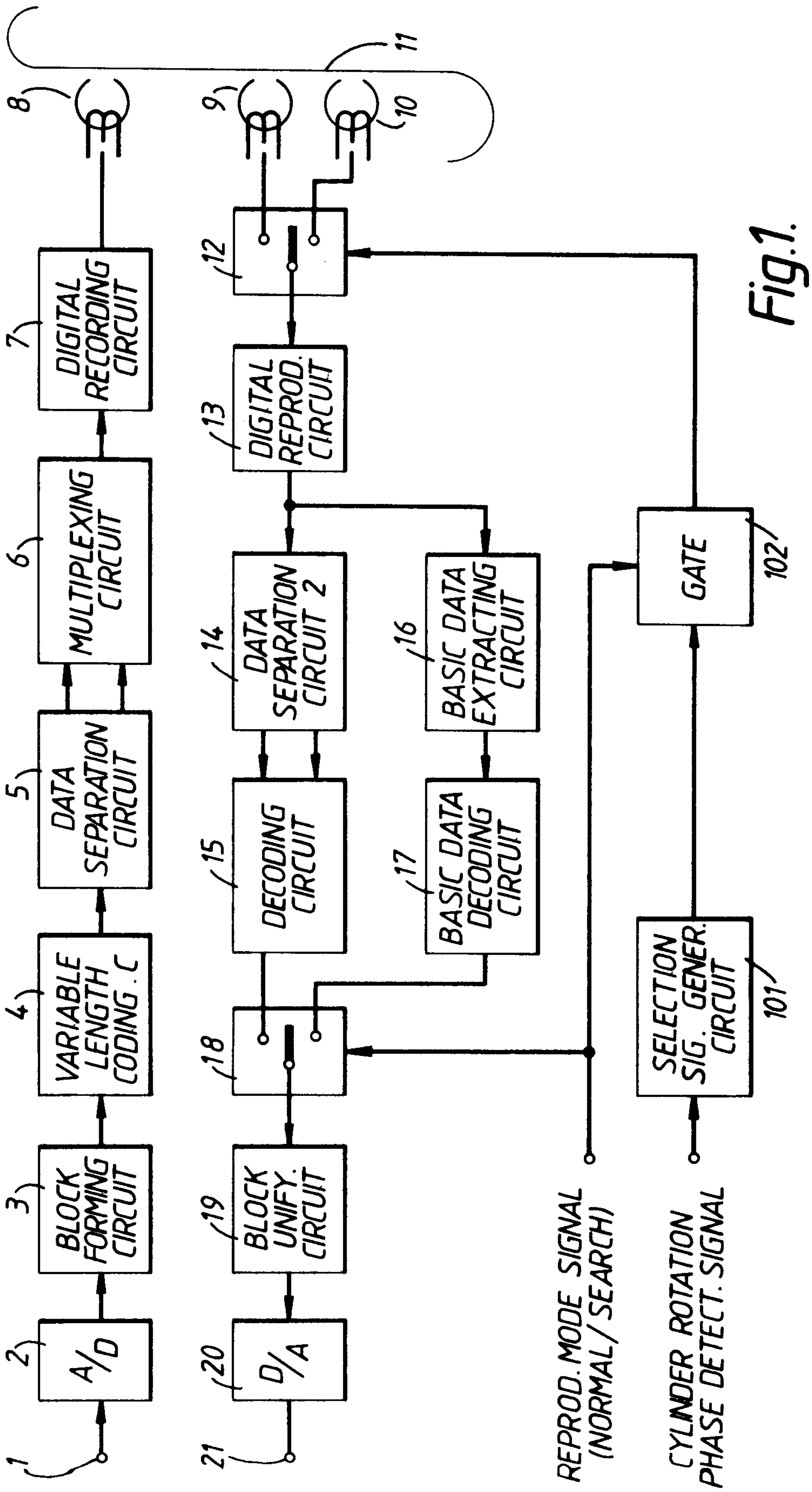

A/D
BLOCK FORMING CIRCUIT
VARIABLE LENGTH CODING . C
DATA SEPARATION CIRCUIT
MULTIPLEXING CIRCUIT
DIGITAL RECORDING CIRCUIT
DIGITAL REPROD. CIRCUIT
DATA SEPARATION CIRCUIT 2
DECODING CIRCUIT
BASIC DATA EXTRACTING CIRCUIT
BASIC DATA DECODING CIRCUIT
BLOCK UNIFY. CIRCUIT
D/A
GATE
SELECTION SIG. GENER. CIRCUIT
REPROD. MODE SIGNAL (NORMAL/ SEARCH)
CYLINDER ROTATION PHASE DETECT. SIGNAL
1
2
3
4
5
6
7
8
9
10
11
12
13
14
15
16
17
18
19
20
21
101
102


Fig.1.

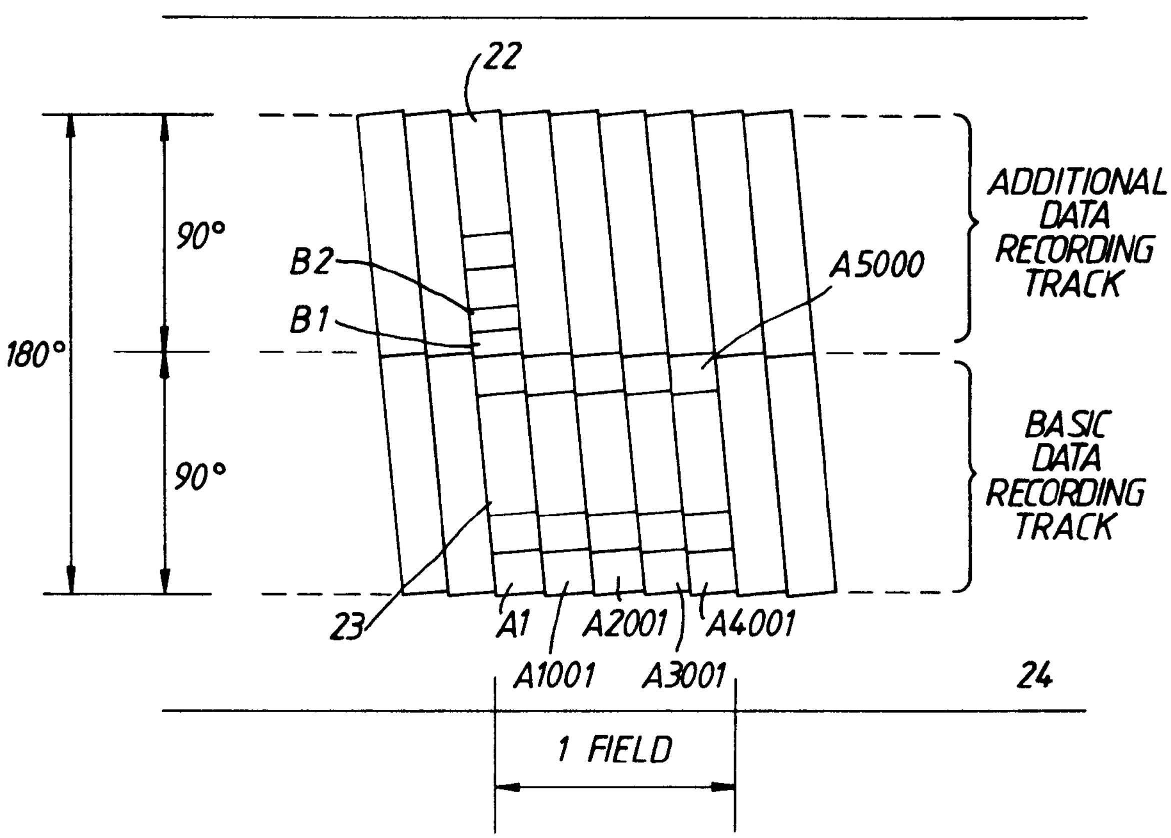
22
90°
180°
90°
B2
B1
A5000
ADDITIONAL DATA RECORDING TRACK
BASIC DATA RECORDING TRACK
23
A1
A2001
A4001
A1001
A3001
24
1 FIELD

Fig.2.

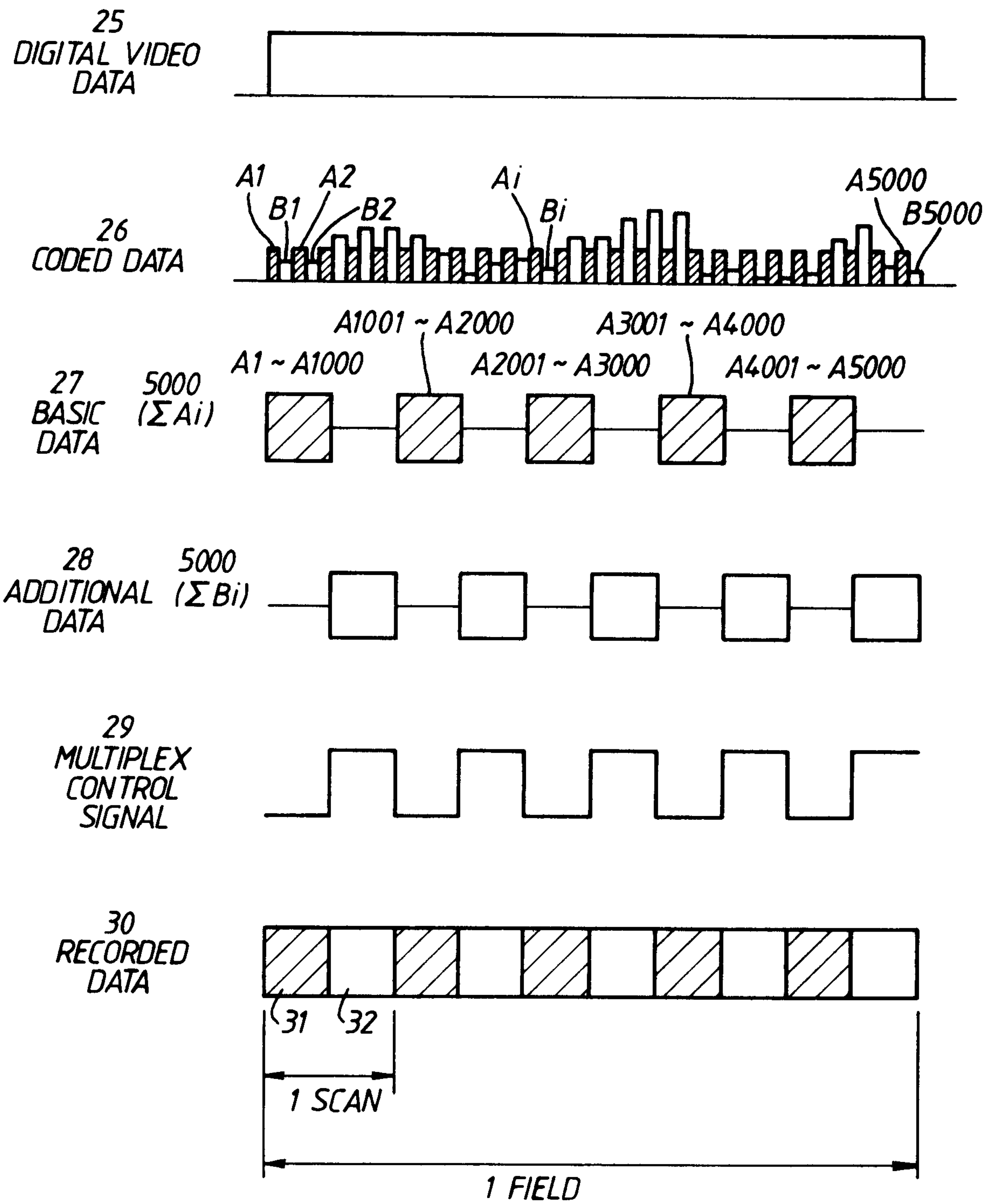
25
DIGITAL VIDEO DATA
26
CODED DATA
A1
B1
A2
B2
Ai
Bi
A5000
B5000
27
BASIC DATA
5000 (ΣAi)
A1 ~ A1000
A1001 ~ A2000
A2001 ~ A3000
A3001 ~ A4000
A4001 ~ A5000
28
ADDITIONAL DATA
5000 (ΣBi)
29
MULTIPLEX CONTROL SIGNAL
30
RECORDED DATA
31
32
1 SCAN
1 FIELD

Fig. 3.

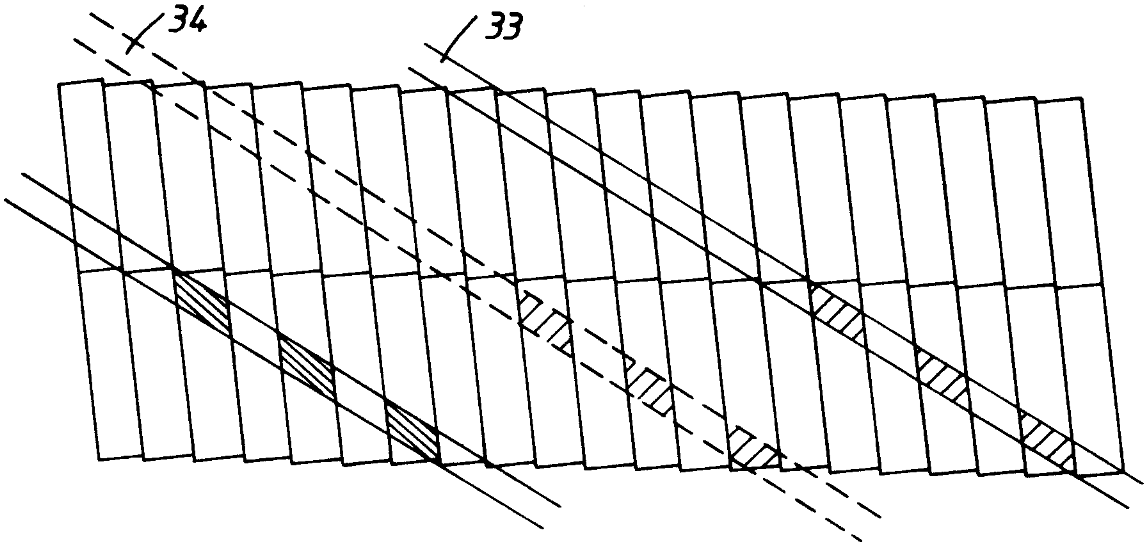
34
33

Fig.4.

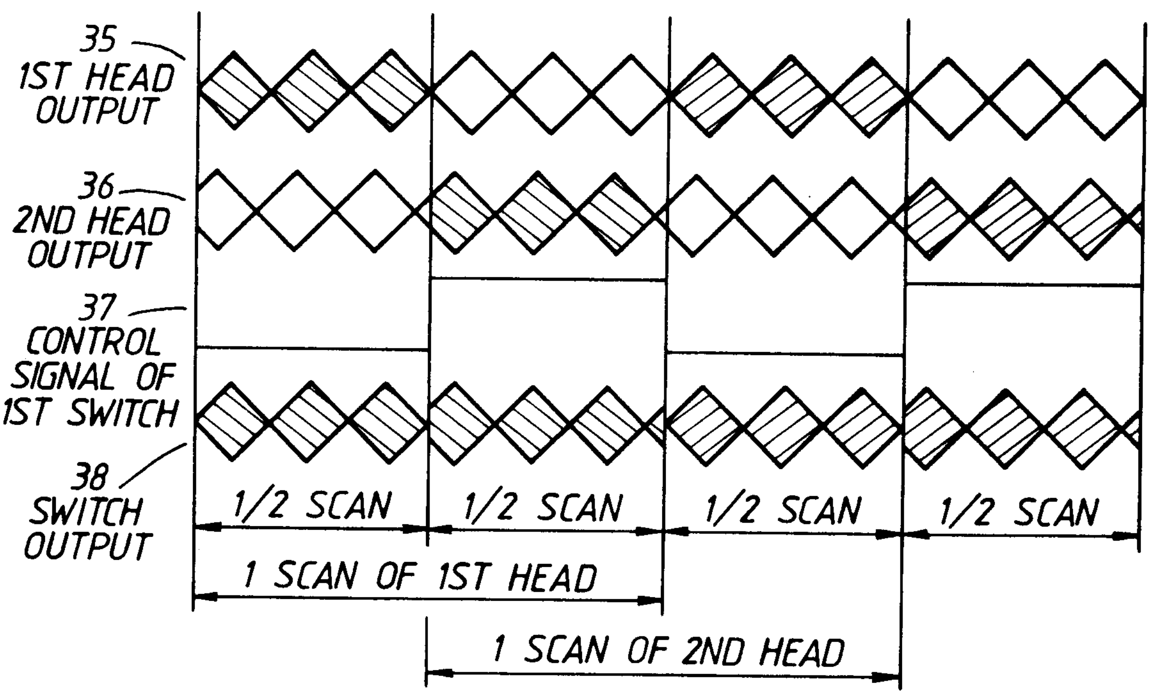
35
1ST HEAD OUTPUT
36
2ND HEAD OUTPUT
37
CONTROL SIGNAL OF 1ST SWITCH
38
SWITCH OUTPUT
1/2 SCAN
1/2 SCAN
1/2 SCAN
1/2 SCAN
1 SCAN OF 1ST HEAD
1 SCAN OF 2ND HEAD

Fig.5.

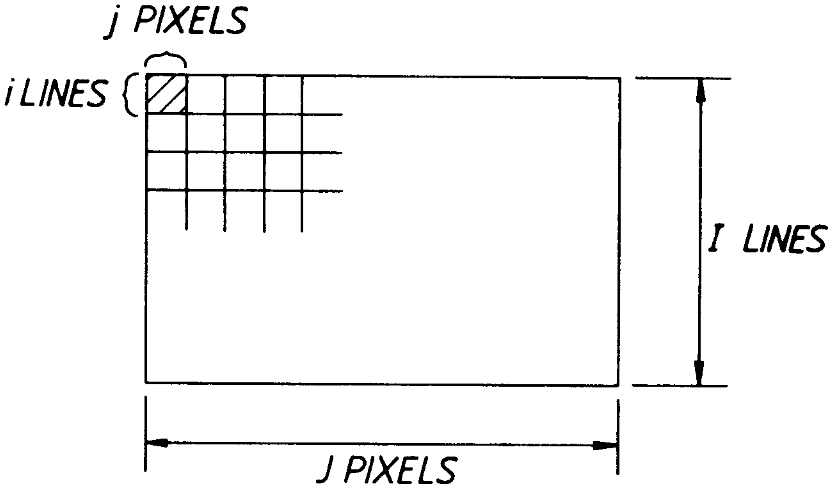
j PIXELS
i LINES
I LINES
J PIXELS

Fig.6.

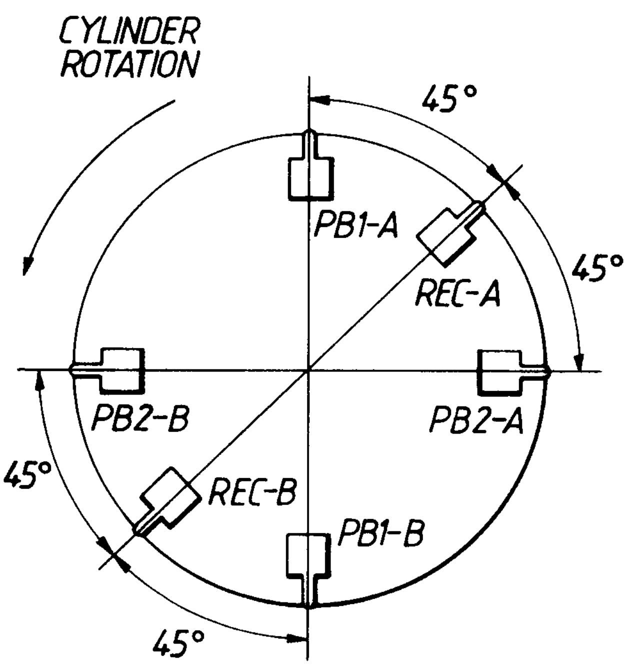
CYLINDER ROTATION
45°
PB1-A
REC-A
45°
PB2-B
PB2-A
45°
REC-B
PB1-B
45°

Fig.7.